# EUROPEAN PATENT SPECIFICATION

(11) **EP 0 719 206 B1**
(45) Date of publication and mention of the grant of the patent: **14.05.1997**
(21) Application number: 94926326.3
(22) Date of filing: 15.09.1994
(51) Int. Cl.: B29C 65/06

(54) **PIPE COUPLING**
ROHRKUPPLUNG
RACCORD DE TUYAUTERIE

(30) Priority: 18.09.1993 GB 9319346
(43) Date of publication of application: 03.07.1996
(73) Proprietor: FUSION GROUP PLC, Chesterfield, Derbyshire S41 9PZ (GB)
(72) Inventor: JENNINGS, Peter, Michael, Sheffield S18 6NB (GB)
(74) Representative: Houghton, David
(86) International application number: GB9402008
(87) International publication number: WO9508431

(56) References cited:
- EP-A- 0 226 933
- WO-A-83/04214
- WO-A-92/17328
- WO-A-94/15137
- WO-A-94/24477
- DE-A- 3 235 638
- DE-A- 3 843 919
- FR-A- 2 218 156
- GB-A- 2 046 155
- US-A- 3 097 551
- US-A- 3 979 977
- US-A- 4 471 674
- US-A- 4 694 712
- US-A- 5 003 847

## Description

This invention relates to pipe couplings and is particularly concerned with an apparatus for connecting adjacent ends of plastics pipes, the connection of fittings to pipe ends, or the connection together of pipe fittings.

There is a growing employment of plastics pipes in the gas and water supply industries and in other sectors such as the electricity and telecommunication fields whereby the supply or service can be provided below ground. The employment of plastics pipes for the supply of gas or water, or along which appropriate cables, wire, optical fibres or the like can pass, has many advantages in combining long life, strength, and flexibility, but plastics pipes are produced in finite lengths with the attendant problem of necessitating the connection of one pipe length to another, with one pipe length at least already laid in such as a trench. With the supply of gas there is the essential need for a gas-tight joint between one pipe length and the next, between a pipe length and a fitting secured to it, and between pipe fittings secured together, which has led to the development of portable equipment to enable such as the butt welding or electrofusion welding of one pipe end to the next, between one pipe end and a fitting, or between two fittings. Whilst not involving the same degree of danger to the public as with the supply of gas, with the supply of water there is the need to insure against the loss of water at a joint, and where pipes are used as trunking for other services the need to provide a joint able to prevent ingress of water and soil/debris.

DE-A-3235638 discloses an apparatus for connecting plastic pipes in which a rotating friction weld coupling sleeve is subjected to an inwardly directed force over the full circumference. WO92/17328 discloses a similar apparatus for creating a weld between pipe ends. Both these documents stress the importance of applying the same load pressure on the coupling sleeve over the full circumference. The preamble of claim 1 is based on the technology disclosed in these documents.

The object of the present invention is to provide a means for the connection of one pipe end to another, for connection of a fitting to a pipe end, or for the connection together of fittings, capable of providing a secure joint between pipe ends/fittings, which means are readily portable to enable its employment as the pipes are laid.

The apparatus of the present invention is defined in claim 1.

It will be understood that the invention may be used for the direct connection of two pipe ends to a coupling sleeve, the connection of a pipe end to a fitting employing a coupling sleeve, and the connection of two pipe fittings by way of a coupling sleeve. Equally embraced is the direct connection to a pipe end of a fitting such as a concentric socket where a pipe-like connecting section on the socket serves as a connecting sleeve to enable such a fitting to be spun and create a welded connection.

For simplicity, reference is made hereinafter to coupling sleeve, and it will be understood that this expression embraces both a separate coupling sleeve and the pipe-like connecting section of a fitting.

To ensure a non-slip engagement as between the drive mechanism and the coupling sleeve, the drive mechanism preferably has a toothed drive member, for engagement with longitudinal teeth formed on the outer periphery of the coupling sleeve.

The coupling sleeve may have a plain bore of a diameter to be a relatively loose sliding fit on the ends of the pipes or the end of a pipe and a fitting and whereby the sleeve can be applied to the pipes with relative ease, the radially inward force applied by the drive mechanism to the coupling sleeve during its rotation ensuring direct and localised contact as between the outer peripheries of the pipe ends/fittings, and the inner wall of the bore of the coupling sleeve, the rotation of the sleeve generating a sufficient friction effect to ensure the melting of the face of the bore and the outer periphery of the ends of the pipes/fittings and whereby following the cessation of rotation and the cooling of the molten material an effective weld is produced between the coupling sleeve and the pipe ends/fittings over their full periphery of the pipe ends.

An essential advantage of the invention is the ease with which a coupling sleeve can be fitted to a pipe end or a fitting, and there is the further advantage that a pipe system of associated pipes and fittings can be laid in place to be followed by the employment of the invention to create the required welded joint between pipes, between pipes and fittings, or between adjacent fittings.

To enhance the effect of friction, it is preferred to form the bore of the coupling sleeve with internal formations that project inwardly of the bore and for contact with the outer peripheries of the pipe ends/fittings. Such formations can take any one of several forms such as spaced protrusions, or longitudinal ribs and intervening slots, with the advantage that the spaces between the protrusions can accommodate the expansion of the material of the sleeve and the pipe ends during melting. However, and more preferably, in the circumstance where a separate coupling sleeve is provided, at least two peripheral grooves are formed internally of the sleeve bore, with at least one such groove associated with a respective pipe end/fitting whereby not only is expansion of the molten interface between the bore of the sleeve and the pipe ends/fittings accommodated, but also and on cooling and the formation of a weld, there is the keying of molten material in the grooves to provide added security against the pipe ends/fittings becoming detached from the sleeve.

To provide a means well able to be transported and used effectively at the location where pipes are being laid, it is preferred to provide the drive mechanism within a housing on which are located appropriate clamps for the securing of pipe ends in closely spaced juxtaposition, the drive mechanism preferably having a toothed drive member for engagement with the coupling sleeve, there being externally of the housing a drive input member for connection to a drive motor. The toothed drive member may be a final drive gear on a gear train within the housing and extending to the drive input member but more preferably the toothed drive member is a toothed belt extending around pulleys positioned within the housing with one of the pulleys connected to the drive input means. According to the invention, the axis of the clamps is so positioned in relation to the position of either a final drive gear or a toothed belt within the housing to guarantee a contact between the outer periphery of a coupling sleeve on the pipe ends/fittings and the drive member such that the radial force applied to the sleeve is sufficient to guarantee the frictional melting at the interface between the bore of the sleeve and the pipe ends/fittings whilst at the same time ensuring that the application of the drive member against the coupling sleeve is not with excessive force.

The invention will now be described in greater detail, by way of example only, with reference to the accompanying drawings in which:-
Figure 1 is a front elevation of apparatus for connecting adjacent ends of plastics pipes in accordance with the invention;
Figure 2 is a rear elevation of the apparatus of Figure 1;
Figure 3 is a section on the line III-III of Figure 1;
Figure 4 is a side elevation of a part of a drive means for use with the apparatus of Figure 1; and
Figure 5 is a front elevation of the part of the drive means illustrated in Figure 4.

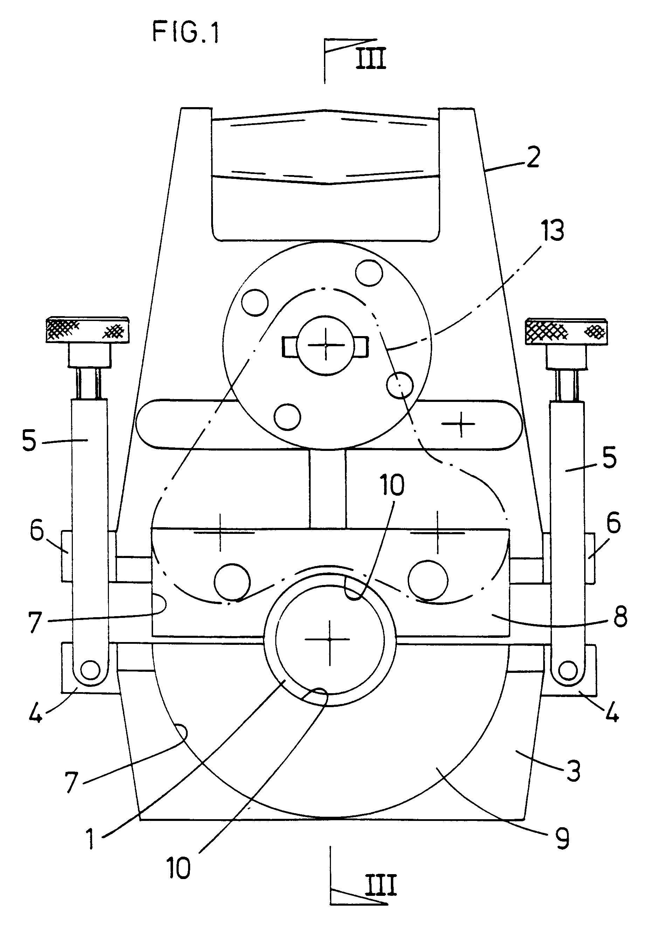

In Figures 1 to 3, apparatus for connecting adjacent ends of plastics pipes 1 is formed by a two-part housing 2, 3, the lower part 3 serving as a base on which the apparatus can rest, and having flanges 4 to each side to each of which is hinged a clamping member 5 that can be swung to overlie a co-operating flange 6 to each side of the upper housing part 2 and whereby the upper part 2 can be clamped to the lower part 3. In the abutting edges of the upper and lower housing parts 2, 3, are cooperating recesses 7 in which are secured upper and lower pipe locating members 8, 9 provided with co-operating semi-circular recesses 10 of a diameter substantially equal to the diameter of the pipes to be joined.

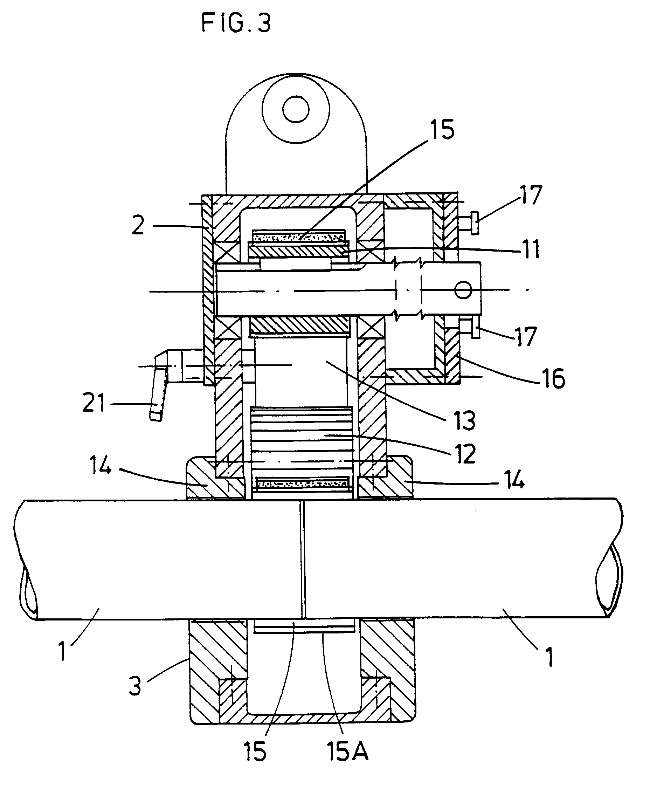

As is shown more particularly by Figure 3, there is, within the upper housing part 2 a drive mechanism formed by a driven gear 11 and idler gears 12 over which passes a toothed drive belt 13, the disposition of the idler gears 12 being such that the plane occupied by the belt bridging the idler gears is at or beyond the point of closest approach of the semi-circular recess 10 in the upper housing part 2. The lower housing part 3 is also hollow, and the distance between its side faces 14 is approximately equal to the length of a coupling sleeve 15 to secure the adjacent ends 1 of the pipes together. As shown, the coupling sleeve 15 has external teeth 15A to be engaged by the toothed belt 13.

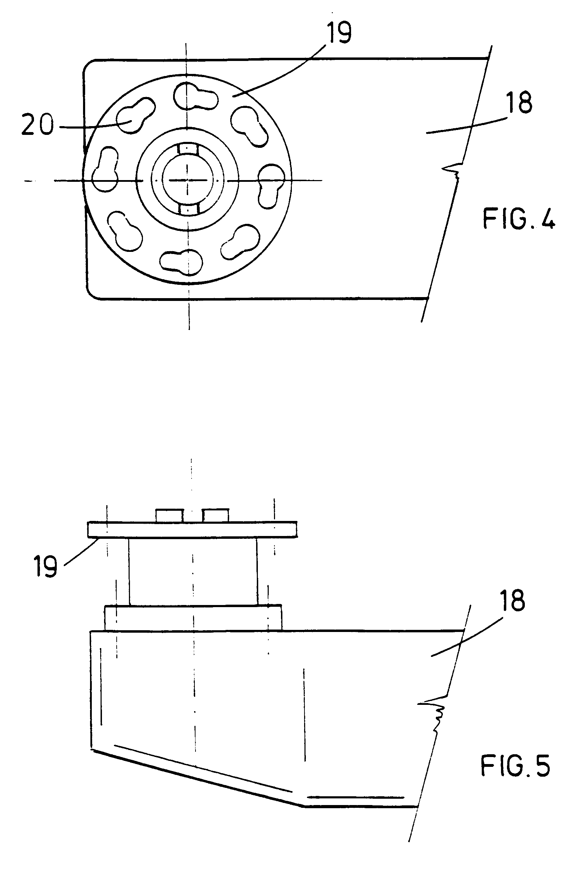

To enable the drive mechanism in the upper housing part 2 to be activated, its driven gear 11 has a shaft extending through a side wall of the upper housing part 2 to a drive member 16 having a number of connecting projections 17. As is shown by Figures 4 and 5, separately provided is a portable electric motor 18, the drive shaft of which extends to a drive member 19 having a number of keyholes 20 that can, when required, engage the projections 17 on the driven member 16 and whereby activation of the electric motor causes the driving of the driven gear 11 and hence movement of the toothed belt.

Thus, following selection of the locating members 8, 9, having a semi-circular recess 10 of a diameter to suit the diameter of the pipe lengths to be secured, and their attachment to the apparatus, a coupling sleeve 15 can be fitted over adjacent pipe ends 1, and with the upper housing part 2 removed from the lower housing part 3, the pipe ends can be laid in the recesses 10 in the members 8 and 9, with the coupling sleeve positioned between the side faces of the lower housing part 3. With the upper housing part 2 then placed on the lower housing part 3 and clamped by the clamps 5, the length of toothed belt extending across the idler gears 12 is caused to press against the coupling sleeve 15 to provide a radially inwardly directed force on the coupling sleeve to ensure its contact with the pipe ends at that side of the coupling. With the electric motor then applied to the drive plate 16, the toothed belt is driven to cause a rotation of the coupling sleeve 15 at a sufficient rate to ensure melting at the interface between the coupling sleeve and the pipe ends, which as a consequence, and following termination of the drive, cools to create an effective weld between the pipe ends and the coupling sleeve.

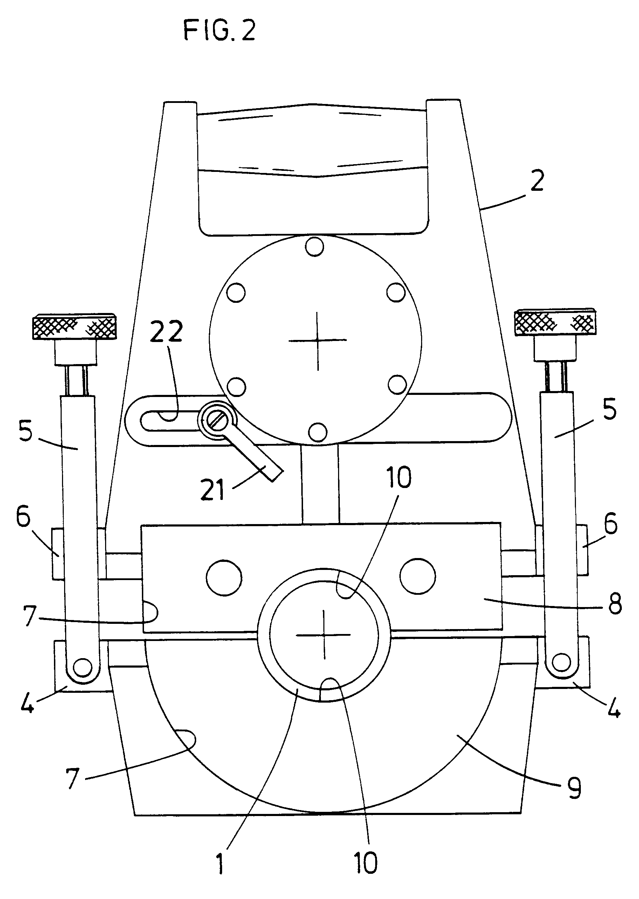

Preferably, the drive belt is of a synthetic plastics material providing good heat resistance and wear properties but which may stretch as a consequence of repeated use. It is therefore desirable, as is illustrated in Figure 2, to provide an adjustable belt tensioner 21 slidable along a slot 22 in the wall of the housing upper part 2 and with a locking lever to lock the tensioner in a required position along the length of the slot. The belt tensioner is formed by a toothed wheel that picks up on the inner face of the belt.

## Claims

1. Apparatus for creating a weld between adjacent pipe ends/fittings (1) and a coupling sleeve (15) in which at least one pipe end or fitting (1) is inserted, the coupling sleeve being caused to rotate to a degree sufficient for the friction melting of the interface between the coupling sleeve and the at least one pipe end or fitting, characterised in that the drive mechanism (13) is adapted to engage the coupling sleeve (15) to one side thereof and impart a rotary motion thereto, said drive mechanism (13) being further adapted to apply a radially inwardly directed force on said coupling sleeve to the side contacted by the drive mechanism, whereby to ensure contact between said coupling sleeve and the pipe end(s)/fitting(s) to that side during rotation of the sleeve.

2. Apparatus as in Claim 1, wherein the drive mechanism is a toothed drive member for engagement with a correspondingly toothed coupling sleeve.

3. Apparatus as in Claim 2, wherein the drive mechanism is a toothed drive belt.

4. Apparatus as in any of Claims 1 to 3, wherein a two-part housing is provided in one part of which is located a drive mechanism, the other part of which forms a support for a pipe end(s)/fitting(s) and the associated coupling sleeve, there being clamp means to hold the housing parts together with consequent contact between the drive mechanism and the coupling sleeve to ensure the application of a radially inward force to the coupling sleeve, there being a drive input member extending out of the said one part of the housing for connection to an appropriate drive means.

5. Apparatus as in Claim 4, wherein the drive mechanism is a toothed belt extending around a drive gear and at least two idler gears in such manner that a part of the run of the toothed belt extends laterally across the location of a coupling sleeve when in place and whereby to apply to the coupling sleeve a radially inwardly directed force when the two parts of the housing means are secured together.

6. Apparatus as in Claim 5 or Claim 6, wherein a belt tensioning means is provided on the housing to compensate for any slack in the drive belt.

7. Apparatus as in any of Claims 1 to 6, wherein a portable drive means is provided for selective engagement with the drive mechanism.

8. Apparatus as in Claim 7, wherein an input drive shaft is provided connected to the drive mechanism, said input drive shaft having a connector for selective engagement by a co-operating connector on the portable drive means.

9. Apparatus as in Claim 7 or Claim 8, wherein the drive means is a portable electric motor.

## Patentansprüche

1. Vorrichtung zur Erzeugung einer Schweißverbindung zwischen den aneinandergrenzenden Rohrenden/Anschlußstücken (1) und einer verbindenden Überwurfmutter (15), in die wenigstens ein Rohrende oder Anschlußstück (1) eingeführt ist, wobei die verbindende Überwurfmutter dazu gebracht wird, in einem Ausmaß zu rotieren, welches zum Reibungsschmelzen der Grenzfläche zwischen der verbindenden Überwurfmutter und wenigstens einem Rohrende oder Anschlußstück ausreicht, **dadurch gekennzeichnet,** daß der Antriebsmechanismus (13) angepaßt ist, daß er in die verbindende Überwurfmutter auf einer Seite davon eingreift und ihr eine Drehbewegung verleiht, wobei der Antriebsmechanismus (13) außerdem angepaßt ist, um eine radial nach innen gerichtete Kraft an die verbindende Überwurfmutter auf der Seite anzulegen, die von dem Antriebsmechanismus kontaktiert wird, wodurch der Kontakt zwischen der verbindenden Überwurfmutter und dem (den) Rohrende(n)/Anschlußstück(en) auf dieser Seite während der Drehung der Überwurfmutter gewährleistet ist.

2. Vorrichtung nach Anspruch 1, in der der Antriebsmechanismus ein gezahntes Antriebsglied zum Eingreifen in eine entsprechend gezahnte verbindende Überwurfmutter ist.

3. Vorrichtung nach Anspruch 2, in der der Antriebsmechanismus ein gezahnter Antriebsriemen ist.

4. Vorrichtung nach irgendeinem der Ansprüche 1 bis 3, in der ein zweiteiliges Gehäuse bereitgestellt ist, in dessen einem Teil ein Antriebsmechanismus angeordnet ist, dessen anderer Teil eine Stütze bildet für ein Rohrende(n)/Anschlußstück(e) und die damit in Verbindung stehende verbindende Überwurfmutter, wobei Klemmenmittel vorhanden sind, um die Gehäuseteile unter einem daraus folgenden Kontakt zwischen Antriebsmechanismus und verbindender Überwurfmutter zusammenzuhalten, um das Anlegen einer radial nach innen gerichteten Kraft an die verbindende Überwurfmutter zu gewährleisten, wobei ein Antriebs-Eingangsglied vorhanden ist, das sich zur Verbindung mit einem geeigneten Antriebsmittel aus dem einen Teil des Gehäuses heraus erstreckt.

5. Vorrichtung nach Anspruch 4, in der der Antriebsmechanismus ein gezahnter Riemen ist, der sich so um eine Antriebsübersetzung und wenigstens zwei Leerlaufübersetzungen herum erstreckt, daß sich ein Teil des Laufes des gezahnten Riemens seitlich über den Ort einer verbindenden Überwurfmutter erstreckt, wenn sie sich an der Verwendungsstelle befindet, und wobei auf die verbindende Überwurfmutter eine radial nach innen gerichtete Kraft angelegt ist, wenn die beiden Teile des Gehäusemittels aneinander befestigt sind.

6. Vorrichtung nach Anspruch 5 oder Anspruch 6, in der ein Riemen-Spannmittel auf dem Gehäuse bereitgestellt ist, um eine Lockerung des Treibriemens auszugleichen.

7. Vorrichtung nach irgendeinem der Ansprüche 1 bis 6, in der ein tragbares Antriebsmittel zum selektiven Schalten des Antriebsmechanismus bereitgestellt ist.

8. Vorrichtung nach Anspruch 7, in der ein Eingangs-Antriebsschaft bereitgestellt ist, der mit dem Antriebsmechanismus verbunden ist, wobei der Eingangs-Antriebsschaft ein Verbindungsteil aufweist zum selektiven Schalten durch ein kooperierendes Verbindungsteil auf dem tragbaren Antriebsmittel.

9. Vorrichtung nach Anspruch 7 oder Anspruch 8, in der das Antriebsmittel ein tragbarer Elektromotor ist.

## Revendications

1. Appareil destiné à créer une soudure entre des extrémités de tuyaux/raccords (1) adjacents et un accouplement à manchon (15), dans lequel au moins une extrémité de tuyau ou un raccord (1) est inséré, l'accouplement à manchon étant amené à tourner d'un degré suffisant pour engendrer la fusion par frottement de l'interface entre l'accouplement à manchon et l'extrémité de tuyau ou raccord, au nombre minimum d'un, caractérisé en ce que le mécanisme d'entraînement (13) est susceptible de s'appliquer sur l'accouplement à manchon (15) d'un côté de celui-ci et de lui imprimer un mouvement rotatif, le mécanisme d'entraînement (13) étant susceptible, en outre, d'appliquer une force, dirigée radialement vers l'intérieur, à l'accouplement à manchon, du côté contacté par le mécanisme d'entraînement, afin d'assurer un contact entre l'accouplement à manchon et l'extrémité (les extrémités) de tuyau/le(s) raccord(s), de ce côté, lors de la rotation du manchon.

2. Appareil selon la revendication 1, dans lequel le mécanisme d'entraînement est un élément d'entraînement denté destiné à coopérer avec un accouplement à manchon denté de façon correspondante.

3. Appareil selon la revendication 2, dans lequel le mécanisme d'entraînement est une courroie d'entraînement crantée.

4. Appareil selon l'une quelconque des revendications 1 à 3, dans lequel un logement à deux parties est prévu, dans une partie duquel se trouve un mécanisme d'entraînement, dont l'autre partie forme un support pour une/des extrémité(s) de tuyau/raccord(s) et l'accouplement à manchon associé, des moyens de serrage étant prévus pour maintenir les parties formant logement ensemble, avec un contact consécutif entre le mécanisme d'entraînement et l'accouplement à manchon afin d'assurer l'application d'une force radialement intérieure sur l'accouplement à manchon, un élément d'application d'entraînement s'étendant hors de la partie du logement afin d'être relié à des moyens d'entraînement adaptés.

5. Appareil selon la revendication 4, dans lequel le mécanisme d'entraînement est une courroie crantée s'étendant autour d'un engrenage d'entraînement et au moins deux pignons fous, de telle sorte qu'une partie de la course de la courroie crantée s'étende latéralement à travers l'emplacement où se trouve un accouplement à manchon lorsqu'il est en place, afin d'appliquer à l'accouplement à manchon une force orientée radialement vers l'intérieur lorsque les deux parties des moyens formant logement sont fixées ensemble.

6. Appareil selon la revendication 5 ou la revendication 6, dans lequel des moyens tendeurs de courroie sont prévus sur le logement, afin de compenser tout relâchement de la courroie crantée.

7. Appareil selon l'une quelconque des revendications 1 à 6, dans lequel des moyens d'entraînement portables sont prévus pour coopérer de façon sélective avec le mécanisme d'entraînement.

8. Appareil selon la revendication 7, dans lequel est prévu un arbre d'entrée relié au mécanisme d'entraînement, l'arbre d'entrée possédant un connecteur pour coopérer de façon sélective avec un connecteur associé présent sur les moyens d'entraînement portables.

9. Appareil selon la revendication 7 ou la revendication 8, dans lequel les moyens d'entraînement sont un moteur électrique portable.
